# EUROPÄISCHE PATENTSCHRIFT

(11) **EP 0 540 542 B1**
(45) Veröffentlichungstag und Bekanntmachung des Hinweises auf die Patenterteilung: **27.04.1994**
(21) Anmeldenummer: 91912447.9
(22) Anmeldetag: 12.07.1991
(51) Int. Cl.: F04B 49/00

(54) **ÜBERSTRÖMVENTIL FÜR EINE HOCHDRUCKPUMPE**
RELIEF VALVE FOR A HIGH-PRESSURE PUMP
SOUPAPE DE DECHARGE POUR UNE POMPE A HAUTE PRESSION

(30) Priorität: 20.07.1990 DE 4023051
(43) Veröffentlichungstag der Anmeldung: 12.05.1993
(73) Patentinhaber: Alfred Kärcher GmbH & Co., 71364 Winnenden (DE)
(72) Erfinder: BENZLER, Siegfried, D-7141 Kirchberg (DE); ROPPELT, Brunhold, D-7150 Backnang (DE)
(74) Vertreter: Hoeger, Stellrecht & Partner
(86) Internationale Anmeldenummer: EP9101308
(87) Internationale Veröffentlichungsnummer: WO9201868

(56) Entgegenhaltungen:
- DE-A- 3 810 341
- DE-C- 2 704 754
- FR-A- 1 577 361

## Beschreibung

Die Erfindung betrifft ein Überströmventil für eine Hochdruckpumpe, insbesondere für Hochdruckreinigungsgeräte, mit einem kugeligen, federnd gegen einen Ventilsitz angedrückten Ventilkörper und mit einem verschiebbaren, den Ventilkörper bei seiner Verschiebung vom Ventilsitz abhebenden Stößel, der mit einem ihn verschiebenden Betätigungselement verbunden ist und durch die Ventilöffnung hindurchragend an dem kugeligen Ventilkörper anliegt.

Überströmventile dieser Art sind beispielsweise aus der DE-PS 27 04 754 bekannt. Sie werden bei Vorrichtungen, die Flüssigkeit unter hohem Druck versprühen, beispielsweise bei Hochdruckreinigungsgeräten, eingesetzt, um eine von der Druckleitung der Hochdruckpumpe abzweigende und zur Saugseite der Hochdruckpumpe zurückführende Bypass-Leitung wahlweise zu öffnen oder zu schließen. Dazu wird das Betätigungselement bei diesen bekannten Überströmventilen als Kolben in einem Kolbenzylinderaggregat ausgebildet, dessen durch den Kolben getrennte Kammern mit verschiedenen Stellen des Flüssigkeitsfördersystems verbunden sind und daher abhängig von dem dort jeweils herrschenden Druck den Kolben gegebenenfalls gegen die Wirkung einer Feder verschieben. Bei dieser Verschiebung liegt der mit dem Kolben verbundene Stößel an dem kugeligen Ventilkörper an und hebt diesen gegen die Wirkung einer Schließfeder mehr oder weniger vom Ventilsitz ab, so daß Flüssigkeit aus der Druckleitung durch den Ringspalt zwischen abgehobenem Ventilkörper und Ventilsitz hindurchströmen kann.

Die der Strömungsflüssigkeit zur Verfügung stehende Ventilöffnung ist ringförmig ausgebildet, da durch die Öffnung der Stößel hindurchragt. Die durch die kugeligen Ventilkörper mit einer Horizontalkomponente in die Ventilöffnung einströmende Flüssigkeit wird dabei gegen die Seitenfläche des Stößels gerichtet, der bei bekannten Überströmventilen dieser Art zylindrisch ausgebildet ist. Es erfolgt eine scharfe Umlenkung der Strömungsrichtung an der zylindrischen Mantelfläche des Stößels.

Bei Überströmventilen dieser Art treten im Hochdruckbetrieb, besonders bei Teilmengenbetrieb, Kavitationen am Stößel auf, besonders am freien Ende des Stößels. Diese Kavitationen erzeugen unangenehme Geräusche, außerdem verschleißen dadurch Ventilkörper und Stößel so stark, daß diese Teile häufig ausgewechselt oder aus besonders hochwertigen Legierungen gefertigt werden müssen.

Es ist Aufgabe der Erfindung, ein gattungsgemäßes Überströmventil so zu verbessern, daß die unerwünschten Kavitationen vermieden werden und daß daher auch die mechanische Beanspruchung des Ventilstößels und des Ventilkörpers herabgesetzt wird.

Diese Aufgabe wird bei einem Überströmventil der eingangs beschriebenen Art erfindungsgemäß dadurch gelöst, daß der Stößel sich zum freien Ende hin von einem Mittelteil mit geringem Durchmesser erweitert und seine Mantelfläche im Bereich des freien Endes des Stößels mit dessen Längsachse einen spitzen Winkel einschließt.

Der Stößel wird also entgegen der bisherigen Übung nicht zylindrisch und stiftförmig ausgebildet, sondern im Anlagebereich an den kugelförmigen Ventilkörper wird der Stössel bewußt erweitert, so daß die Mantelfläche nach außen geneigt wird. Dadurch ergibt sich ein weniger abrupter Übergang für die an dem kugeligen Ventilkörper entlangströmende Flüssigkeit, die Mantelfläche des Stößels wirkt also als annähernd stetige Umlenkfläche für die durch die Ventilöffnung strömende Flüssigkeit. Durch diese Ausbildung werden Druckspitzen beim abrupten Richtungsübergang von einer Kugel in einen zylindrischen Stößel vermieden. Versuche haben für Ventilkörper-Stößel-Anordnungen dieser Art bei sonst ungeändertern Betriebsparametern wesentlich höhere Standzeiten für den Stößel und den Ventilkörper ergeben. Außerdem wurde der Geräuschpegel gesenkt.

Dabei kann der Winkel zwischen Mantelfläche und Längsachse im Bereich zwischen 1° und 60° liegen, vorzugsweise wird er so gewählt, daß die Mantelfläche des Stößels bei Anlage des Stößels an dem kugeligen Ventilkörper im wesentlichen stetig in die Oberfläche des Ventilkörpers übergeht.

Es ist weiterhin vorteilhaft, wenn die Mantelfläche von der Stirnfläche über den Mittelteil mit geringem Durchmesser und einen sich daran anschließenden, wieder einen zunehmenden Durchmesser aufweisenden Oberteil stetig konkav gekrümmt ist. Man erhält somit eine stetige Umlenkfläche für den Flüssigkeitsstrom durch die Ventilöffnung, die diesen Strom auch nach dem Passieren der Ventilöffnung wieder nach außen lenkt. Dies ist bei Überströmventilen dieser Bauart günstig, da normalerweise in der Verlängerung des Stößels das Antriebselement und der Antriebsmechanismus angeordnet sind, so daß die Flüssigkeit nach dem Passieren der Ventilöffnung im wesentlichen quer zur Durchströmrichtung der Ventilöffnung selbst abgeführt wird.

Der Stößel ist vorzugsweise um seine Längsachse rotationssymmetrisch ausgebildet.

Bei einem bevorzugten Ausführungsbeispiel ist vorgesehen, daß die Stirnfläche eine von der äußeren Kante zur Mitte des Stößels hin abfallende Ausnehmung aufweist, die vorzugsweise kugelkalottenförmig ausgebildet ist. Der Radius dieser Kugelkalotte wird dabei insbesondere so gewählt, daß er dem Radius des kugeligen Ventilkörpers entspricht. Durch diese Ausgestaltung ist es möglich, daß man das sich erweiternde, freie Ende des Stößels mit einem relativ großen Radius ausbildet, also einen relativ großen Bereich des kugeligen Ventilkörpers überdeckt und daß man den kugeligen Ventilkörper in diesem Stirnflächenbereich in den Querschnitt des Stößels eintauchen läßt. Dies erleichtert das stetige Anlegen der Mantelfläche an den kugeligen Ventilkörper, so daß bei dieser Konstruktion trotz des vergrößerten Durchmessers des Stößels gegenüber herkömmlichen, zylindrischen Stößeln keine unerwünschten Spalte zwischen der Stößelstirnfläche und der Oberfläche des kugeligen Ventilkörpers auftreten.

Die nachfolgende Beschreibung bevorzugter Ausführungsformen der Erfindung dient im Zusammenhang mit der Zeichnung der näheren Erläuterung. Es zeigen:
- Figur 1: eine schematische Seitenansicht eines Überströmventils und
- Figur 2: eine Seitenansicht eines bevorzugten Ausführungsbeispiels eines sich zum freien Ende hin erweiternden Stößels in Anlage an einem kugeligen Ventilkörper eines Überströmventils.

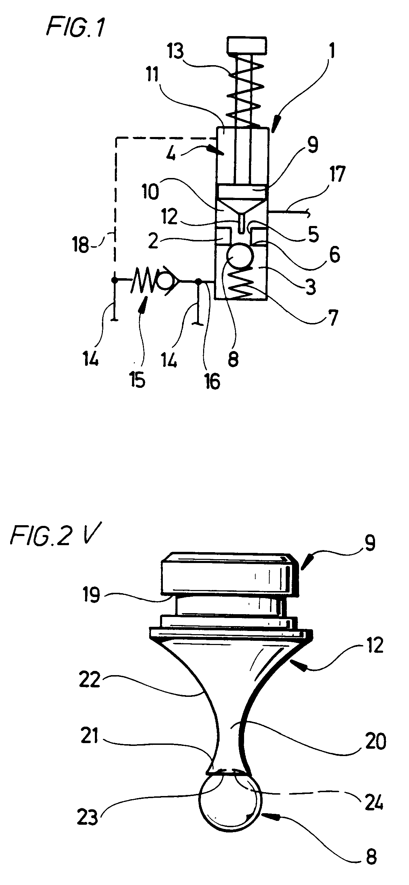

Das in Figur 1 dargestellte Überströmventil umfaßt ein zylindrisches Gehäuse 1, welches durch eine Zwischenwand 2 in eine Zuflußkammer 3 und eine Abflußkammer 4 unterteilt wird. In der Zwischenwand 2 befindet sich eine zentrale Ventilöffnung 5 mit einem ringförmigen Ventilsitz 6, an dem durch eine Feder 7 ein kugeliger Ventilkörper 8 anliegt.

Die Abflußkammer 4 nimmt einen in ihr längsverschieblich und abgedichtet gelagerten Kolben 9 auf, der die Abflußkammer 4 ihrerseits wieder in zwei Teilkammern 10 und 11 unterteilt, nämlich eine der Zwischenwand 2 benachbarte Teilkammer 10 und eine davon abgewandte Teilkammer 11.

Der Kolben 9 trägt an seinem der Teilkammer 10 zugewandten Ende einen in die Ventilöffnung 5 hineinragenden Stößel 12, der bei einer entsprechenden Verschiebung des Kolbens 9 am kugeligen Ventilkörper 8 zentral anlegbar ist.

Der Kolben 9 wird durch eine Feder 13 normalerweise in eine Stellung verschoben, in der der Stößel 12 nicht am kugelförmigen Ventilkörper 8 anliegt. Um den Stößel an den Ventilkörper anzulegen und den Ventilkörper dann gegen die Kraft der Feder 7 zu öffnen, muß der Kolben 9 gegen die Kraft der Feder 13 verschoben werden.

Das beschriebene Überströmventil kann beispielsweise in einem Hochdruckreinigungsgerät eingesetzt werden. Dieses umfaßt eine in der Zeichnung nicht dargestellte Hochdruckpumpe, deren Hochdruckleitung 14 über ein Rückschlagventil 15 zu einer in der Zeichnung ebenfalls nicht dargestellten Hochdruckspritzpistole führt.

Von der Hochdruckleitung 14 zweigt stromaufwärts des Rückschlagventiles 15 eine in die Zuflußkammer 3 einmündende Leitung 16 ab, die zusammen mit einer aus der Teilkammer 10 austretenden Leitung 17 eine Bypass-Leitung bildet, die in aus der Zeichnung nicht ersichtlicher Weise zur Saugseite der Hochdruckpumpe zurückführt.

Die Teilkammer 11 steht über eine Steuerleitung 18 mit der Druckleitung 14 in Verbindung, wobei die Steuerleitung 18 stromabwärts des Rückschlagventiles 15 abzweigt.

Ein solches Überströmventil ist bei normalem Betrieb geschlossen, wenn also Flüssigkeit von der Hochdruckpumpe über die Druckleitung 14 zur Hochdruckspritzpistole gefördert wird. Ergibt sich jedoch ein Druckanstieg in der Druckleitung 14, beispielsweise durch Verwendung einer Auslaßdüse mit geringerem Auslaßquerschnitt in der Sprühlanze, steigt auch der Flüssigkeitsdruck in der Teilkammer 11 soweit an, daß der Kolben 9 entgegen der Kraft der Feder 13 verschoben wird. Bei der Anlage des Stößels 12 am Ventilkörper 8 wird dieser vom Ventilsitz 6 abgehoben, so daß ein Teil der von der Hochdruckpumpe geförderten Flüssigkeit über die Leitung 16, die Zuflußkammer 3, die Teilkammer 10 und die Leitung 17 wieder der Saugseite der Pumpe zugeführt wird. Auf diese Weise wird die Menge der Flüssigkeit reduziert, die über die Hochdrucksprühlanze und die Düse mit verringertem Auslaßquerschnitt abgegeben wird.

Wird die Sprühlanze ganz verschlossen, steigt der Druck in der Hochdruckleitung 14 zunächst ebenfalls weiter an, bis auf diese Weise das Überströmventil vollständig geöffnet wird. Dies führt durch den geringen Strömungswiderstand der Bypass-Leitung zu einem Druckabfall im stromaufwärts des Rückschlagventiles 15 gelegenen Teil der Druckleitung 14, im stromabwärts gelegenen Teil bleibt jedoch durch das Rückschlagventil der hohe Druck erhalten und somit auch der Öffnungszustand des Bypass-Ventils. Erst beim Öffnen der Sprühlanze fällt dieser Druck im stromabwärts gelegenen Teil der Hochdruckleitung 14 wieder ab, so daß dann das Überströmventil wieder schließt.

In Figur 2 ist ein bevorzugtes Ausführungsbeispiel eines Stößels 12 in Anlage an einem kugeligen Ventilkörper 8 dargestellt. Der Stößel 12 ist mit dem Kolben 9 einstückig ausgebildet, der Kolben 9 weist Umfangsnuten 19 zur Aufnahme von in der Zeichnung nicht dargestellten Dichtungen auf.

Kolben und Stößel sind rotationssymmetrisch bezüglich ihrer Längsachse.

Der Stößel 12 ist zunächst im wesentlichen vom Kolben 9 ausgehend konisch ausgebildet und mündet in einen Mittelteil 20 mit geringstem Durchmesser ein. Von diesem Mittelteil 20 bis zum freien Ende 21 des Stößels 12 erweitert sich dieser wieder, wobei die Mantelfläche 22 im gesamten Bereich stetig konkav gebogen ist.

In die Stirnfläche 23 des Stößels 12 ist eine zentrale Vertiefung 24 eingelassen, die vorzugsweise die Form einer Kugelkalotte hat, deren Radius dem des kugeligen Ventilkörpers 8 entspricht. Auf diese Weise taucht dieser Ventilkörper 8 bei der Anlage des Stößels 12 geringfügig in den Querschnitt des Stößels ein, wie aus Figur 2 deutlich wird. Durch die Erweiterung des Stößels im Bereich des freien Endes und die dadurch bedingte Neigung der Mantelfläche nach außen hin ergibt sich im Übergangsbereich zwischen dieser Mantelfläche 22 und der Oberfläche des Ventilkörpers 8 ein im wesentlichen stetiger Strömungsübergang, wobei dies durch das Eintauchen des Ventilkörpers in die Vertiefung 24 noch unterstützt wird. Die am Ventilkörper 8 bei Öffnung des Ventils vorbeiströmende Flüssigkeit wird daher im Übergangsbereich zwischen Ventilkörper 8 und Stößel 12 stetig geführt und im Oberteil des Stößels radial nach außen umgelenkt, ohne daß abrupte Richtungsänderungen und dadurch bedingte Kavitationen und Verschleißerscheinungen auftreten.

## Patentansprüche

1. Überströmventil für eine Hochdruckpumpe, insbesondere für Hochdruckreinigungsgeräte, mit einem kugeligen, federnd gegen einen Ventilsitz angedrückten Ventilkörper und mit einem verschiebbaren, den Ventilkörper bei seiner Verschiebung vom Ventilsitz abhebenden Stößel, der mit einem ihn verschiebenden Betätigungselement verbunden ist und durch die Ventilöffnung hindurchragend an dem kugeligen Ventilkörper anliegt,
dadurch gekennzeichnet, daß der Stößel (12) sich zum freien Ende (21) hin von einem Mittelteil (20) mit geringem Durchmesser erweitert und seine Mantelfläche (22) im Bereich des freien Endes (21) des Stössels (12) mit dessen Längsachse einen spitzen Winkel einschließt.

2. Überströmventil nach Anspruch 1, dadurch gekennzeichnet, daß der Winkel zwischen Mantelfläche (22) und Längsachse im Bereich zwischen 1° und 60° liegt.

3. Überströmventil nach einem der Ansprüche 1 oder 2, dadurch gekennzeichnet, daß die Mantelfläche (22) von der Stirnfläche (23) über den Mittelteil (20) mit geringem Durchmesser und einen sich daran anschließenden, wieder einen zunehmenden Durchmesser aufweisenden Oberteil stetig konkav gekrümmt ist.

4. Überströmventil nach einem der voranstehenden Ansprüche, dadurch gekennzeichnet, daß der Stößel (12) um seine Längsachse rotationssymmetrisch ist.

5. Überströmventil nach einem der voranstehenden Ansprüche, dadurch gekennzeichnet, daß die Stirnfläche (23) eine von der äußeren Kante zur Mitte des Stös -sels (12) hin abfallende Ausnehmung (24) aufweist.

6. Überströmventil nach Anspruch 5, dadurch gekennzeichnet, daß die Ausnehmung (24) kugelkalottenförmig ausgebildet ist.

7. Überströmventil nach Anspruch 6, dadurch gekennzeichnet, daß der Radius der Kugelkalotte dem Radius des kugeligen Ventilkörpers (8) entspricht.

8. Überströmventil nach einem der voranstehenden Ansprüche, dadurch gekennzeichnet, daß die Mantelfläche (22) des Stößels (12) bei Anlage des Stößels (12) an dem kugeligen Ventilkörper (8) im wesentlichen stetig in die Oberfläche des Ventilkörpers (8) übergeht.

## Claims

1. Relief valve for a high-pressure pump, in particular for high-pressure cleaning equipment, comprising a spherical valve body pressed resiliently against a valve seat and a displaceable push rod lifting the valve body off the valve seat during its displacement, said push rod being connected to an actuating element displacing said push rod and projecting through the valve opening to abut on the spherical valve body, characterized in that the push rod (12) widens towards the free end (21) from a middle section (20) having a small diameter and its outer surface (22) forms an acute angle with its longitudinal axis in the region of the free end (21) of the push rod (12).

2. Relief valve as defined in claim 1, characterized in that the angle between outer surface (22) and longitudinal axis is in the range of between 1° and 60°.

3. Relief valve as defined in either of claims 1 or 2, characterized in that the outer surface (22) is curved in a continuously concave manner from the end face (23) over the middle section (20) having a small diameter and an upper section adjoining thereto and again having an increasing diameter.

4. Relief valve as defined in any of the preceding claims, characterized in that the push rod (12) is symmetrical with respect to rotation about its longitudinal axis.

5. Relief valve as defined in any of the preceding claims, characterized in that the end face (23) has a recess (24) decreasing in size from the outer edge towards the middle of the push rod (12).

6. Relief valve as defined in claim 5, characterized in that the recess (24) is designed in the shape of a spherical segment.

7. Relief valve as defined in claim 6, characterized in that the radius of the spherical segment corresponds to the radius of the spherical valve body (8).

8. Relief valve as defined in any of the preceding claims, characterized in that the outer surface (22) of the push rod (12) merges essentially continuously into the surface of the valve body (8) when the push rod (12) abuts on the spherical valve body (8).

## Revendications

1. Soupape de décharge pour une pompe à haute pression, en particulier pour appareils de nettoyage sous haute pression, comprenant un opercule de valve sphérique repoussé élastiquement contre un siège de valve, et comprenant un poinçon mobile qui soulève lors de sont déplacement l'opercule de valve par rapport au siège de valve, ledit poinçon étant relié à un élément d'actionnement qui le déplace et engageant l'opercule de valve sphérique en traversant l'ouverture de valve, caractérisée en ce que le poinçon (12) s'élargit en direction de l'extrémité libre (21) à partir d'une partie centrale (20) de faible diamètre et en ce que sa surface enveloppe (22) inclut par rapport à son axe longitudinal un angle aigu dans la région de l'extrémité libre (21) du poinçon (12).

2. Soupape de décharge selon la revendication 1, caractérisée en ce que l'angle entre la surface enveloppe (22) et l'axe longitudinal est compris dans cette région entre 1° et 60°.

3. Soupape de décharge selon l'une ou l'autre des revendications 1 et 2, caractérisée en ce que la surface envelloppe (22) est incurvée de manière concave progressivement depuis la face d'extrémité (23) en passant par la partie centrale (20) de faible diamètre jusqu'à une partie supérieure qui s'y raccorde et qui présente à nouveau un diamètre croissant.

4. Soupape de décharge selon l'une des revendications précédentes, caractérisée en ce que le poinçon (12) présente une symétrie de révolution autour de son axe longitudinal.

5. Soupape de décharge selon l'une des revendications précédentes, caractérisée en ce que la face d'extrémité (23) comporte un évidement (24) qui tombe depuis l'arête extérieure jusqu'au milieu du poinçon (12).

6. Soupape de décharge selon la revendication 5, caractérisée en ce que l'évidement (24) est réalisé sous la forme d'une calotte sphérique.

7. Soupape de décharge selon la revendication 6, caractérisée en ce que le rayon de la calotte sphérique correspond au rayon de l'opercule de valve sphérique (8).

8. Soupape de décharge selon l'une des revendications précédentes, caractérisée en ce que la surface enveloppe (22) du poinçon (12) se transforme sensiblement progressivement dans la surface de l'opercule de valve (8) lorsque le poinçon (12) engage l'opercule de valve sphérique (8).
